(19) Europäisches Patentamt
European Patent Office
Office européen des brevets

(11) EP 0 602 971 B1

(12) **EUROPEAN PATENT SPECIFICATION**

(45) Date of publication and mention
of the grant of the patent:
**21.08.1996 Bulletin 1996/34**

(51) Int. Cl.$^6$: **B60C 11/04**, B60C 11/11

(21) Application number: **93310162.8**

(22) Date of filing: **16.12.1993**

(54) **Pneumatic radial tyre**

Radialer Luftreifen

Bandage pneumatique radial

(84) Designated Contracting States:
**DE FR GB**

(30) Priority: **16.12.1992 JP 353874/92**

(43) Date of publication of application:
**22.06.1994 Bulletin 1994/25**

(73) Proprietor: **SUMITOMO RUBBER INDUSTRIES,
CO. LTD
Chuo-ku Kobe-shi Hyogo-ken 651 (JP)**

(72) Inventors:
• **Iwamura, Wako
Kobe-shi, Hyogo (JP)**

• **Narahara, Yasuhiro
Kobe-shi, Hyogo (JP)**

(74) Representative: **Stewart, Charles Geoffrey
SP TYRES UK LIMITED
Technical Division
Fort Dunlop, Erdington, Birmingham B24 9QT
(GB)**

(56) References cited:
**EP-A- 0 455 925        EP-A- 0 477 542
EP-A- 0 508 090        DE-U- 8 628 836
FR-A- 1 096 945        GB-A- 869 980**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.13.2/3.4

**Description**

The present invention relates to a pneumatic radial tyre provided with a tread pattern having straight grooves that extend circumferentially around the tread.

Recent passenger car tyres are in many cases provided with a rib pattern, or a tread pattern that has straight grooves extending circumferentially around the tread, because it offers the following advantages: small rolling resistance, good ride characteristics, good steering stability, low noise between the tyre and the road surface, and less likelihood of "hydroplaning" in the presence of a water film on the road surface.

In order to further reduce the noise that develops between the tyre and the road surface and to suppress more effectively the occurrence of "hydroplaning" in the presence of a water film on the road surface while enhancing the drive and brake forces, various approaches are being adopted. These approaches include increasing not only the number of straight grooves, but also the number of transverse or lug grooves that intersect with the straight grooves and extend transversely across the tread, as well as increasing the angle the lug grooves form with respect to the straight grooves.

However, if the number of straight grooves and lug grooves are simply increased in a conventional pneumatic radial tyre, the area of each of the blocks formed by the straight grooves and lug grooves will decrease, leading to lower rigidity of the blocks and poor steering ability.

An object, therefore, of the present invention is to provide a pneumatic radial tyre that has straight grooves of broad and narrow width and which is adapted to ensure sufficient rigidity in the tread to provide better steering stability.

According to one aspect of the present invention a pneumatic radial tyre has at least one, circumferentially extending wide straight groove (2), a straight circumferentially extending sub-groove (3) narrower than the middle groove and a plurality of transverse lug grooves (5) which extend transversely across the tread, characterised by the grooves combining to form acute-angled blocks each having a land angle which is greater than zero degrees but less than 70 degrees ($0° < \alpha < 70°$), and tie bars (10) with a circumferential length of $L_1$ and a depth of $D_1$ provided within the sub-groove (3) between adjacent blocks in the transverse direction of the tread, said tie bars (10) satisfying the following relationships:

$$L_1 \leq 0.7 \cdot A$$

$$0.1 \cdot D \leq D_1 \leq 0.5 \, D$$

$$D\text{-}1.6mm \leq D_2 \leq (D\text{-}1.6mm) \times 0.5$$

$$D_1 < D_2$$

where

$D_2$:     the depth of the sub-groove (3) in which said tie bars (10) are provided;
D:     the depth of a groove provided with a wear indicator:
A:     the length of the side of each block that faces the lug groove and which forms the land angle as taken along either of the two straight grooves.

The resultant tread has a ratio $S_C/S_L$ where $S_C$ is the total area of openings in the groove regions and $S_L$ is the total area of the land regions, i.e. those block surfaces in the tread which come in contact with the road surface) which is increased sufficiently to permit effective water drainage, and the grooves serve as sipes to provide better wet performance in the presence of a water film on the road surface and offer better ride characteristics.

In accordance with the present invention, the narrow sub-grooves combine with the lug grooves to form acute-angled blocks that each have a land angle $\alpha$ which is greater than zero degrees but less than 70 degrees ($0° < \alpha < 70°$) with respect to the sub-grooves and this design contributes even better ride characteristics.

Furthermore, tie bars having a circumferential length of $L_1$ and a depth of $D_1$ are provided within the narrow width sub-groove between adjacent blocks in the transverse direction of the tread. The tie bars which satisfy the four conditions set forth above reinforce the acute-angled portions of the blocks to make them more rigid, thereby improving the steering stability characteristics of the tyre.

An embodiment of the present invention is described below with reference to the accompanying diagrammatic drawings in which:

Figure 1 shows a tread pattern of a tyre; and
Figure 2 is a diagram showing a section of Figure 1 taken on line II-II.

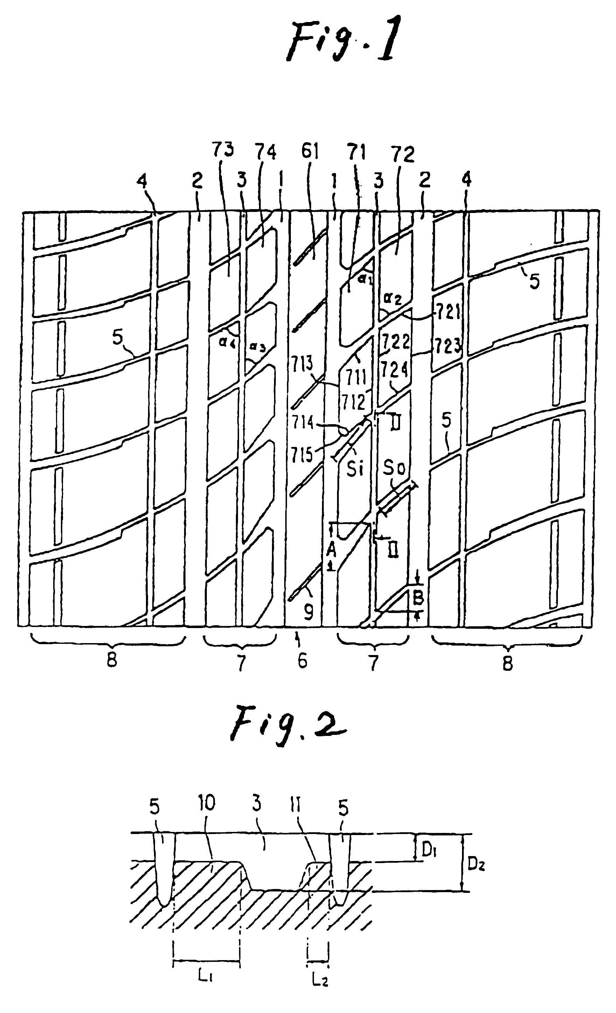

As shown in Figure 1, the tread of the tyre is provided in the central portion with two spaced apart broad width straight centre grooves 1 which extend circumferentially around the tread. Two straight middle grooves 2 extend circumferentially around the tread positioned transversely outwards of and a distance from each of the centre grooves 1.

On each side of the tyre, between the centre groove 1 and the adjacent straight groove 2, there is provided a straight sub-groove 3 that is narrower than the straight groove 1 and which extends circumferentially around the tread. A shoulder straight sub-groove 4 which is also narrower than the straight groove 2 and which extends circumferentially is provided transversely outwards of the straight groove 2 by a given distance.

To take a typical example, the sub-groove 3 and the shoulder straight sub-groove 4 have a width of 0.5 to 3.0mm and their depth is 80% to 15% of the depth of the grooves that are provided with wear indicators (which are usually the centre groove 1 and the straight groove 2). If the width of the sub-groove 3 and the shoulder sub-groove 4 is less than 0.5mm, there is too little water drainage.

It should be noted that the grooves 1 to 4 need not be strictly straight and may be in a zigzag form.

With the arrangement just described above, the ratio of $S_C$ (the total area of the openings in the groove regions) to $S_L$ (the total area of land portions i.e. those block surfaces in the tread which come in contact with the road surface) is set sufficiently large to permit effective water drainage and the grooves serve as sipes to provide better wet performance in the presence of a water film on the road surface and offer better ride characteristics.

A plurality of lug grooves 5 each of which intersect the grooves 1 to 4 at predetermined angles extend from the centre groove 1 to the edge of the tread in a transverse direction in such a way that the lug grooves 5 are provided on either side of the two centre grooves 1 taken as a whole or pair. The lug grooves 5 on the opposite sides of the pair of centre grooves 1 are arranged to have point symmetry with respect to a point on the centreline of the tread.

A row of centre blocks 6 is formed between the two centre grooves, a row of middle blocks 7 is formed between each centre groove 1 and one of the straight grooves 2, and a row of shoulder blocks 8 is formed axially outwards of each middle groove 2.

The centre blocks 6 each have comparable angles to the lug grooves 5 with respect to the circumferential direction and a plurality of centre blocks 61 are formed in segments divided up by sipes 9 that are aligned with the lug grooves 5 on either side of the unit of centre grooves 1.

A row of middle blocks 7 is provided on both sides of the single row of centre blocks 6. Each row of middle blocks consists of inner middle blocks and outer middle blocks that are defined by sub-grooves 3 and the lug grooves 5. As shown, the inner middle blocks are designated by 71 and 73, and the outer middle blocks are designated by 72 and 74.

The row of shoulder blocks 8 is provided on both outer sides of the single row of centre blocks 6.

Each row of shoulder blocks consists of inner shoulder blocks 81 and outer shoulder blocks 82 defined by shoulder sub-grooves 4 and the lug grooves 5.

Each of the inner middle blocks 71 in the row of middle blocks 7 shown on the right side in Figure 1 comprises a step-in side 711 which faces the lug groove 5 in the step-in portion, an axially outer lateral side 712 which faces the sub-groove 3, an axially inner lateral side 713 which faces the centre groove 1, a kickout side 714 which faces the lug groove 5 in the kickout portion, an oblique side 715 which faces both the centre groove 1 and the lug groove 5 in the kickout portion. Each of the outer middle blocks 71 comprises a step-in side 721 which faces the lug groove 5 in the step-in portion, an axially inner lateral side 722 which faces the sub-groove 3, and axially outer lateral side 723 which face the straight groove 2, and a kickout side 724 which faces the lug groove 5 in the kickout portion.

The acute angle formed by the substrate groove 3 and the lug groove 5 in each inner middle block 71 may be defined as a land angle $\alpha_1$. More particularly, the acute land angle formed by the step-in side 711 and the outer lateral side 712 is defined as the land angle $\alpha_1$ for the inner middle block 71. On the other hand, the acute vertical angle formed by the inner lateral side 722 and the kickout side 724 in each outer middle blocks 72 is defined as land angle $\alpha_2$. In accordance with the present invention, each of the land angles $\alpha_1$ and $\alpha_2$ is greater than zero degrees but less than 70 degrees ($0° < \alpha_1 < 70°; 0° < \alpha_2 < 70°$). Thus in general $0° < \alpha < 70°$.

As Figure 2 shows, the sub-groove 3 which is located between the row of inner middle blocks 71 and the row of outer middle blocks 72 is furnished with tie bars (10, 11) that reinforce the acute-angled portions of each of the inner middle blocks 71 and outer middle blocks 72.

Each tie bar consists of an inner tie bar 10 and an outer tie bar 11. The inner tire bar 10 having a length of $L_1$ contacts the land angle $\alpha_1$ of each inner middle block 71 (namely, it contacts the outer lateral side 712) and extends from the site where the sidewall of the lug groove 5 faced by the step-in side 711 intersects with the sub-groove 3. The outer tie bar 11, having a length of $L_2$, contacts the land angle $\alpha_2$ of each outer middle block 72 (namely, it contacts the inner lateral side 722) and extends from the site where the sidewall of the lug groove 5 faced by the kickout side 724 intersects with the sub-groove 3. Various parameters for the tie bars and associated components are written using the following symbols: $D_1$ for the depth of each of the inner tie bar 10 and outer tie bar 11 respectively as measured from the surface of the tread; $D_2$ for the depth of the sub-groove 3 between the inner tie bar 10 and the outer tie bar 11; D for the depth of the grooves which are provided with wear indicators (which are usually the centre grooves 1 and the straight grooves 2); $s_i$ for the length of the step-in side 711 of each inner middle block 71; A for the length of the step-in side 711 as taken along the sub-groove 3; $s_o$ for the length of the kickout side 724 of each outer middle block 72; and B for the length of the kickout side 724 as taken along the sub-groove 3. Unless $D_1$ is 50% of D or less, the tie bars will not produce satisfactory reinforcing effects. On the other hand, the greater the value of $D_2$, which refers to the depth of those portions of the sub-groove 3 where no tie bars are provided, the better is the appearance of the tyre in the middle and subsequent phases of wear. Under these circumstances, the following relationships will hold:

$$L_1 \gtrsim 0.7 \cdot A \,(L_1 \gtrsim 0.7 \cdot s_i \cdot \cos\alpha_1)$$

$$L_2 \gtrsim 0.7 \cdot B \,(L_2 \gtrsim 0.7 \cdot s_o \cdot \cos\alpha_2)$$

$$0.1 \cdot D \leqq D_1 \leqq 0.5\,D$$

$$D\text{-}1.6mm \leqq D_2 \leqq (D\text{-}1.6mm)\text{x}0.5$$

$$D_1 < D_2$$

where $A = s_i \cdot \cos\alpha_1$ and $B = s_o \cdot \cos\alpha_2$.

The inner middle blocks 73 and the other middle blocks 74 in the row of middle blocks 7 which are located on the left side of Figure 1 are formed to have point symmetry with the inner middle blocks 71 and the outer middle blocks 72 in the right row of middle blocks 7 with respect to a point on the centreline through the tread. Thus, the relationship between the step-in and kickout portions in the left row of middle blocks is opposite to that in the right row of middle blocks. Stated more specifically, the land angle $\alpha_3$ which is the acute angle located in the kickout portion of the inner middle block 73 corresponds to the land angle $\alpha_1$ of the inner middle block 71, whereas the land angle $\alpha_4$ of the outer middle block 74 corresponds to the land angle $\alpha_2$ of the outer middle block 72. the former two land angles are the same ($\alpha_2 = \alpha_4$), with the tie bars being in conformity with the respective acute angles formed in a similar manner to each other.

A tyre was constructed and tested in comparison with tyres of the convention structure according to Comparative Examples I to IV. The results of the test are shown in Table 1 below.

All tyres under test were of size 185/60R14. the tyre of Comparative Example I had tie bars with dimensions outside the ranges specified by the present invention, the tyre of Comparative Example II had not tie bars, the tyre of Comparative Example III was characterised in that all the (fine) straight grooves of narrow width that extended circumferentially were made with a shallow depth, and the tyre of Comparative Example IV had no straight grooves of narrow width extending circumferentially.

The greater the values for the test data as shown in Table 1, the better.

Table 1

| | Ex. | Comp.Ex.1 | Comp.Ex II (without tie bars) | Comp Ex III (all fine grooves shallow) | Comp Ex IV (without fine grooves) |
|---|---|---|---|---|---|
| Tie bar installation dimensions | 0.75A | 0.5A | - | - | - |
| | 0.8B | 0.9B | - | - | - |
| | 3.0mm | 3.0mm | 5.0mm | 3.0mm | - |
| | 5.0mm | 5.0mm | 5.0mm | 3.0mm | - |
| | 8.0mm | 8.0mm | 8.0mm | 8.0mm | 8.0mm |
| Steering stability | 3 | 3 | 2.8 | $3^+$ | 3.1 |
| Ride | 3 | 3 | $3^+$ | 2.9 | 2.8 |
| Hydroplaning | 3 | 3 | 3 | 3 | $3^-$ |
| Wet performance in the presence of water film | 3 | 3 | 3 | 3 | $3^-$ |
| Appearance after test on steering stability | 3 | 2.8 | 2.6 | $3^+$ | $3^+$ |
| | | | | | |
| | | | | | |

4

As is clear from Table 1, the tyre of the invention was very satisfactory in terms of steering stability, wet performance and appearance compared to the comparison tyres which were poor.

Having the construction described hereinabove, the present invention offers the following advantages. since the tread having straight grooves of broad width is also provided with straight grooves of narrow width, the ratio $S_C$ (the total area of openings in the groove regions) to $S_L$ (the total area of the land regions, i.e. those block surfaces in the tread which come in contact with the road surface) is increased sufficiently to permit more effective water drainage, and the grooves serve as sipes to provide better wet performance in the presence of a water film on the road surface and offer better ride characteristics.

The straight grooves of narrow width combine with the lug grooves to form acute-angled blocks that each have a land angle $\alpha$ which is greater than zero degrees but less than 70 degrees ($0°<\alpha<70°$) with respect to the straight grooves and this design contributes to even better ride characteristics.

Furthermore, tie bars having a circumferential length of $L_1$ and a depth of $D_1$ are provided within the straight groove of narrow width between blocks that are adjacent to each other in the transverse direction of the tread. The tie bars which satisfy the four conditions set forth hereinabove reinforce the acute-angled portions of the blocks to make them more rigid, thereby improving the steering stability characteristics of the tyre.

## Claims

1. A pneumatic radial tyre having at least one circumferentially extending wide straight groove (2), a straight circumferentially extending sub-groove (3) narrower than the middle groove (1) and a plurality of transverse lug grooves (5) which extend transversely across the tread, characterised by the grooves combining to form acute-angled blocks each having a land angle $\alpha$ which is greater than zero degrees but less than 70 degrees ($0°<\alpha<70°$), and tie bars (10, 11), wherein the inner tie bar (10) has a circumferential length of $L_1$ and a depth of $D_1$ provided within the sub-groove (3) between adjacent blocks in the transverse direction of the tread, said tie bars (10) satisfying the following relationships:

$$L_1 \geqq 0.7\,A$$

$$0.1\,D \leqq D_1 \leqq 0.5\,D$$

$$D\text{-1.6mm} \leqq D_2 \leqq (D\text{-1.6mm})\text{x}0.5$$

$$D_1 < D_2$$

where

$D_2$:    the depth of the sub-groove (3) in which said tie bars (10) are provided;
$D$:    the depth of a groove provided with a wear indicator;
$A$:    the length of the side of each block that faces the lug groove and which forms the land angle $\alpha$ as taken along either of the two straight grooves.

2. A tyre according to claim 1, characterised by a straight centre groove (1), this groove and the straight groove (2) being wide grooves substantially wider than the sub-groove (3).

3. A tyre according to claim 2, characterised by a substantially straight shoulder groove (4) provided in each shoulder region having a width in the range of 0.5 to 3.0mm and a depth of 80 to 15% the depth of either the centre groove (1) or the straight groove (2).

4. A tyre according to claim 2 or 3, characterised in that the centre groove (1), straight groove (2) and sub-groove (3) have a zigzag form.

5. A tyre according to any one of claims 1 to 4 characterised in that the tie bars comprise an inner tie bar (10) and an outer tie bar (11), the outer tie bar having a length $L_2$ and extending from the site where the sidewall and the lug groove (5) intersect with the sub-groove (3).

## Patentansprüche

1. Ein radialer Luftreifen mit Wenigstens einer sich in Umfangsrichtung erstreckenden breiten geraden Rille (2), einer sich in Umfangsrichtung erstreckenden geraden Nebenrille (3), die enger als die Mittelrille (1) ist, und einer Mehrzahl von Querstollenrillen (5), die sich quer über die Lauffläche erstrecken, dadurch gekennzeichnet, daß sich die Rillen verbinden, um spitzwinklige Blöcke zu bilden, die jeweils einen Landwinkel $\alpha$, der größer als Null Grad aber kleiner als 70 Grad ist ($0° < \alpha < 70°$), und Verbindungsstollen (10, 11) haben, wobei der innere Verbindungsstollen (10) eine Umfangslänge von $L_1$ und eine Tiefe von $D_1$ hat, die innerhalb der Nebenrille (3) zwischen nebeneinander liegenden Blöcken in der Querrichtung der Lauffläche vorgesehen sind und die Verbindungsstollen (10) den folgenden Beziehungen genügen:

$$L_1 \cong 0,7\, A$$

$$0,1\, D \leqq D_1 \leqq 0,5\, D$$

$$D - 1,6\,\text{mm} \leqq D_2 \leqq (D - 1,6\,\text{mm}) \times 0,5$$

$$D_1 < D_2$$

wobei

$D_2$: die Tiefe der Nebenrille (3) ist, in der die Verbindungsstollen (10) vorgesehen sind;

$D$: die Tiefe einer Rille ist, die mit einem Abnutzungsindikator versehen ist;

$A$: die Länge derjenigen Seite eines jeden Blockes ist, die der Stollenrille zugewandt ist und die den Landwinkel $\alpha$ gegenüber einer der beiden geraden Rillen bildet.

2. Ein Reifen nach Anspruch 1, gekennzeichnet durch eine gerade Mittelrille (1), wobei diese Rille und die gerade Rille (2) breite Rillen sind, die wesentlicher breiter als die Nebenrille (3) sind.

3. Ein Reifen nach Anspruch 2, gekennzeichnet durch eine in jedem Schulterbereich vorgesehene im wesentlichen gerade Schulterrille (4) mit einer Breite in dem Bereich von 0,5 bis 2,0 mm und einer Tiefe von 80 bis 15 % der Tiefe der Mittelrille (1) oder der geraden Rille (2).

4. Ein Reifen nach Anspruch 2 oder 3, dadurch gekennzeichnet, daß die Mittelrille (1), die gerade Rille (2) und die Nebenrille (3) eine Zickzackform haben.

5. Ein Reifen nach einem der Ansprüche 1 bis 4, dadurch gekennzeichnet, daß die Verbindungsstollen einen inneren Verbindungsstollen (10) und einen äußeren Verbindungsstollen (11) umfassen, wobei der äußere Verbindungsstollen eine Länge von $L_2$ hat und sich von der Stelle aus erstreckt, wo die Seitenwand und die Stollenrille (5) mit der Nebenrille (3) zusammenstoßen.

## Revendications

1. Pneumatique à carcasse radiale comprenant au moins une gorge rectiligne large (2) placée circonférentiellement, une gorge auxiliaire rectiligne (3) placée circonférentiellement et plus étroite que la gorge médiane (1), et plusieurs gorges transversales (5) disposées transversalement sur la bande de roulement, caractérisé en ce que les gorges forment en combinaison des blocs à angle aigu, ayant chacun un angle de portée $\alpha$ supérieur à 0° mais inférieur à 70° ($0° < \alpha < 70°$), et des barres de liaison (10, 11), et la barre de liaison interne (10) a une longueur circonférentielle $L_1$ et une profondeur $D_2$ dans la gorge auxiliaire (3) entre les blocs adjacents dans la direction transversale de la bande de roulement, les barres de liaison (10) remplissant les conditions suivantes :

$$L_1 > 0,7\, A$$

$$0,1\, D \leqq D_1 \leqq 0,5\, D$$

$$D - 1,6\,\text{mm} \leqq D_2 \leqq (D - 1,6\,\text{mm}).0,5$$

$$D_1 < D_2$$

$D_2$ indiquant la profondeur de la gorge auxiliaire (3) dans laquelle sont placées les barres de liaison (10), D désignant la profondeur d'une gorge ayant un indicateur d'usure, et A désignant la longueur du côté de chaque bloc tourné vers la gorge transversale et qui forme l'angle de portée $\alpha$, déterminé le long de l'une des deux gorges rectilignes.

2. Pneumatique selon la revendication 1, caractérisé par une gorge centrale rectiligne (1), cette gorge et la gorge rectiligne (2) étant des gorges larges nettement plus larges que la gorge auxiliaire (3).

3. Pneumatique selon la revendication 2, caractérisé par une gorge pratiquement rectiligne d'épaulement (4) placée dans chaque région d'épaulement et ayant une largeur comprise entre 0,5 et 3,0 mm et une profondeur comprise entre 80 et 15 % de la profondeur de la gorge centrale (1) ou de la gorge rectiligne (2).

4. Pneumatique selon la revendication 2 ou 3, caractérisé en ce que la gorge centrale (1), la gorge rectiligne (2) et la gorge auxiliaire (3) ont une forme sinueuse.

5. Pneumatique selon l'une quelconque des revendications 1 à 4, caractérisé en ce que les barres de liaison comportent une barre interne (10) et une barre externe (11) de liaison, la barre externe de liaison ayant une longueur $L_2$ et partant de l'emplacement auquel le flanc de la gorge transversale (5) recoupe la gorge auxiliaire (3).

# Fig·1

# Fig.2